# EUROPEAN PATENT APPLICATION

(11) **EP 1 300 983 A2**
(43) Date of publication of application: **09.04.2003**
(21) Application number: 02256634.3
(22) Date of filing: 25.09.2002
(51) Int. Cl.: H04L 12/24

(54) **Managing distributed network infrastructure services**

(30) Priority: 04.10.2001 US 971206
(71) Applicant: Hewlett-Packard Company, Palo Alto, CA 94304 (US)
(72) Inventor: Chan, Michele W., Melo Park, CA 94025 (US); Russell, Lance W., Hollister, CA 95023 (US)
(74) Representative: Powell, Stephen David

(57) **Abstract**

In a system for managing distributed network infrastructure services, a service management module (28) is configured to deploy network infrastructure services across a distributed computing environment. Each network infrastructure service is provided by a respective network device (14-18) whose resources are allocated to perform a single network infrastructure service function at any given time. Each network device (14-18) may be reconfigured to perform a different network infrastructure function. In this way, network infrastructure services may be deployed rapidly and flexibly in accordance with a selected network management policy, while substantially maintaining the performance advantages provided by dedicated-function network devices. In addition, because the network infrastructure services are deployed from a centralized source, a plurality of distributed network devices (14-18) may be synchronized and reconfigured of in a coherent and efficient way.

## Description

This invention relates to systems and methods for managing distributed network infrastructure services.

In modem computer systems, computers may communicate with each other and with other computing equipment over various types of data networks. Routable data networks are configured to route data packets (or frames) from a source network node to one or more destination network nodes. As used herein, the term "routable protocol" refers to a communications protocol that contains a network address as well as a device address, allowing data to be routed from one network to another. Examples of routable protocols are SNA, OSI, TCP/IP, XNS, IPX, AppleTalk, and DECnet. A "routable network" is a network in which communications are conducted in accordance with a routable protocol. One example of a routable network is the Internet, in which data packets are routed in accordance with the Internet Protocol (IP). In a routable data network, when a network routing device (or router) receives a data packet, the device examines the data packet in order to determine how the data packet should be forwarded. Similar forwarding decisions are made as necessary at one or more intermediate routing devices until the data packet reaches a desired destination node.

Network infrastructure services have been developed for monitoring, managing and manipulating traffic through a network. In general, network infrastructure services may be classified as security services (e.g., firewall, proxy and intrusion detection services), quality of service services (e.g., load balancing), or network management services (e.g., application level management and active network management services). These services conventionally are implemented as one or more software modules executing on general-purpose computers, in hardware, firmware or software operating in single-function (or dedicated) devices, or in software or firmware operating on switches and routers. A general-purpose computer typically provides a complete operating environment for network infrastructure applications, including all of the services provided by the operating system and application program interfaces for communicating with the
operating system. New network infrastructure applications may be loaded and existing network infrastructure applications may be updated on a general-purpose computer simply by loading the new application or application update. However, the performance (e.g., bandwidth, latency, interrupt response time, and processing speed) of general-purpose computers typically is not optimized for running network infrastructure applications. In contrast, the performance of a dedicated device typically is optimized for providing a particular network infrastructure service. Although the operating characteristics of a dedicated device may be changed simply by loading a new configuration file into a dedicated device, the service functionality of a dedicated device typically cannot be changed. Thus, a new dedicated device usually is needed for each new network infrastructure service that is to be implemented in the network.

In sum, in terms of network infrastructure service management, general-purpose computers provide the greatest flexibility and the lowest performance, whereas dedicated devices typically provide the highest performance and the least flexibility. The flexibility and performance characteristics of routers and switches generally fall somewhere between the corresponding characteristics of general-purpose computers and dedicated devices.

To address some of these issues, U.S. Patent No. 6,157,955 has proposed a general-purpose programmable packet-processing platform for accelerating network infrastructure applications that have been structured to separate the stages of classification and action. Network packet classification, execution of actions upon those packets, management of buffer flow, encryption services, and management of Network Interface Controllers are accelerated by a multiplicity of specialized modules. A language interface is defined for specifying both stateless and stateful classification of packets and to associate actions with classification results in order to efficiently utilize these specialized modules.

The invention features a novel scheme (systems and methods) for managing network infrastructure services. In particular, the invention features a service management module that is configured to deploy network infrastructure services across a distributed computing environment. Each network infrastructure service is provided by a respective network device whose resources are allocated to perform a single network infrastructure service function at any given time. Each network device may be reconfigured to perform a different network infrastructure function. In this way, the invention allows network infrastructure services to be deployed rapidly and flexibly in accordance with a selected network management policy, while substantially maintaining the performance advantages provided by dedicated-function network devices. In addition, because the network infrastructure services are deployed from a centralized source, the invention facilitates the optimal synchronization and reconfiguration of a plurality of distributed network devices in a coherent and efficient way.

In one aspect of the invention, a service management module is operable to cause a network device to receive a network infrastructure service module that enables the network device to perform a selected dedicated network infrastructure function.

Embodiments in accordance with this aspect of the invention may include one or more of the following features.

The network infrastructure service module preferably comprises an application module that is operable to control the functionality of the network device, and a configuration file that contains parameters for controlling operating characteristics of the network device. The network infrastructure service module may further comprise a kernel that is operable to provide basic services to the application module.

The service management module preferably is operable to select the dedicated network infrastructure function to be performed by the network device based upon a network management policy. The dedicated network infrastructure function may be selected from the group consisting of: a network security function, a quality of service function, and a network management function. The network infrastructure service module may be loadable by the network device at boot-up or dynamically.

The service management module preferably is operable to cause the network device to receive a replacement network infrastructure service module that enables the network device to perform a different dedicated network infrastructure function. For example, the service management module may be configured to cause the network infrastructure service module to be received by the network device in response to an initialization request received from the network device.

The invention also features a method and a computer program for managing the deployment of a plurality of distributed network infrastructure services.

Other features and advantages of the invention will become apparent from the following description, including the drawings and the claims.

FIG. 1 is a diagrammatic view of a computer network across which a plurality of infrastructure services are distributed.

FIG. 2 is a flow diagram of a method of managing a plurality of network infrastructure services that are deployed across the network of FIG. 1.

FIG. 3A is a block diagram of a server computer on which a service management module may execute to carry out to the network infrastructure service deployment method of FIG. 2.

FIG. 3B is a diagrammatic view of a service management module execution environment provided by the server computer of FIG. 3A.

FIG. 4A is a block diagram of a network device on which a network infrastructure service module may execute to enable the network device to perform a dedicated network infrastructure function.

FIG. 4B is a diagrammatic view of a network infrastructure service module execution environment provided by the network device of FIG. 4A.

In the following description, like reference numbers are used to identify like elements. Furthermore, the drawings are intended to illustrate major features of exemplary embodiments in a diagrammatic manner. The drawings are not intended to depict every feature of actual embodiments nor relative dimensions of the depicted elements, and are not drawn to scale.

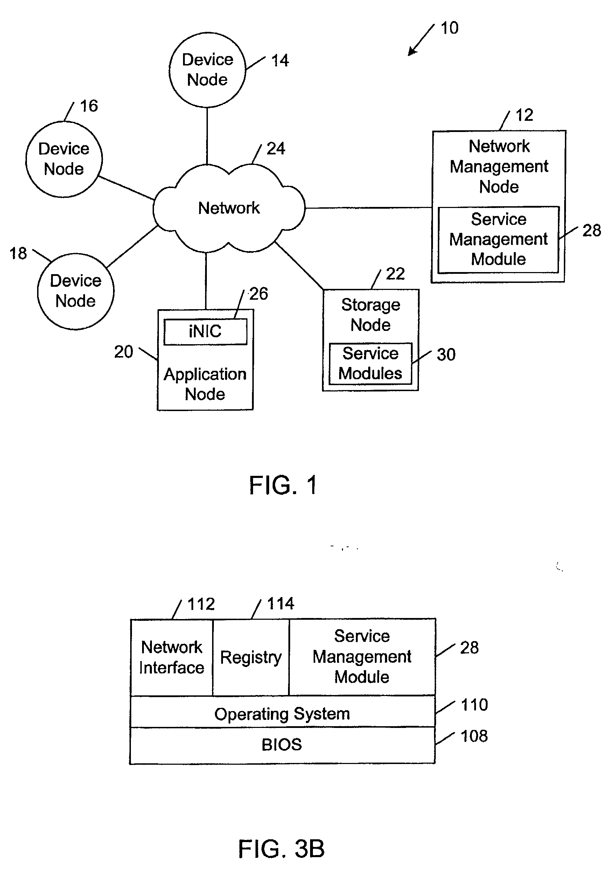

Referring to FIG. 1, in one embodiment, a distributed computing system 10 includes a plurality of distributed nodes, including a network management node 12 three device nodes 14, 16, 18, an application node 20, and a storage node 22 that are interconnected by a network 24. Each device node 14-18 includes a network device whose functionality and operating characteristics may be reconfigured. Similarly, application node 20 includes an intelligent network interface card (iNIC) 26 that also may be reconfigured.

Network 24 may be implemented as a local area network (LAN), a wide area network (WAN), or other routable network (e.g., the Internet). Network 24 may include any number of servers and end stations that are interconnected by switches or routers or other devices in accordance with any one of a wide variety of different topologies. Communications between servers and end stations are conducted in accordance with a routable communications protocol (e.g., TCP/IP, SNA, OSI, XNS, IPX, AppleTalk, and DECnet). In this context, a protocol consists of a set of rules that define how the entities interact with each other. Data transmission over network 24 involves generating data in a sending process executing on a transmitting end station, and passing that data down through the layers of a protocol stack where the data is sequentially formatted for delivery as frame bits. The frame bits are received at a destination station where they are reassembled into a complete frame, which is passed up the protocol stack to a receiving process. Each layer of the protocol stack typically adds a header to the data generated by the upper layer as the data descends the stack. At the destination station, the headers are stripped off one-by-one as the frame propagates up the layers of the stack until the frame arrives at the receiving process.

As explained in detail below, network management node 12 includes a service management module 28 that is configured to deploy network infrastructure services across distributed computing environment 10 by causing each network device 14-18, 26 to receive a network infrastructure service module 30 that is stored at storage node 22. Each network infrastructure service module 30 may be loaded by a respective network device 14-18, 26 to implement a particular network infrastructure service function. For example, in one illustrative network infrastructure service deployment, device nodes 14, 16 may be configured to perform load balancing functions, and device node 18 and iNIC 26 may be configured to perform firewall functions. Other network infrastructure service deployments are possible. The resources of each network device 14-18, 26 are allocated to perform a single network infrastructure service function at any given time. In addition, each network device may be reconfigured to perform a different network infrastructure function simply by loading a different network infrastructure service module 30. In this way, network infrastructure services may be deployed rapidly and flexibly in accordance with a selected network management policy, while substantially maintaining the performance advantages provided by dedicated-function network devices. In addition, because the network infrastructure services are deployed from a centralized source, the distributed network devices may be synchronized and reconfigured in a coherent and efficient way.

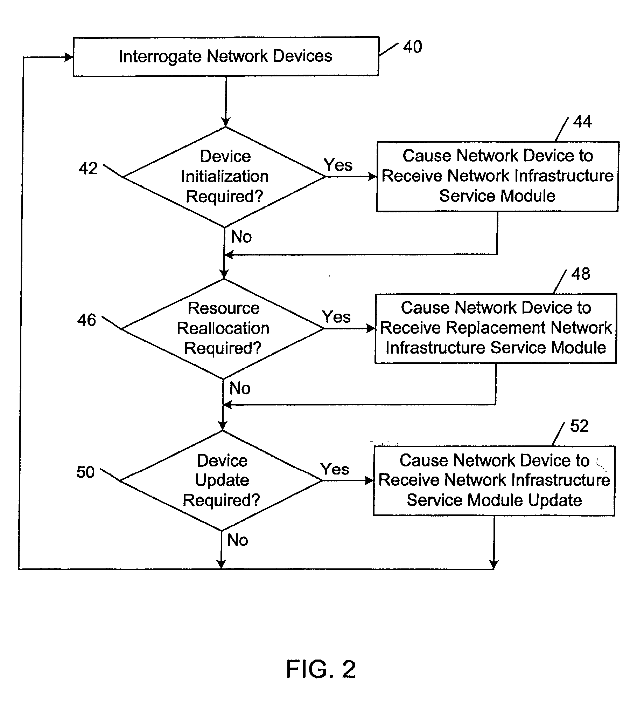

Referring to FIG. 2, in one embodiment, service management module 28 may manage a plurality of network infrastructure services that are deployed across distributed computing environment 10 as follows. Service management module 28 interrogates network devices 14-18, 26 to determine the status of the network devices and to obtain statistics about network traffic flowing through the network devices (step 40).
Communication between service management module 28 and network devices 14-18, 26 may be in accordance with a simple network management protocol (SNMP), a common open policy service (COPS) protocol, or some other agreed-upon protocol. Based upon this information, service management module 28 determines whether a network device initialization is required (e.g., because there is a new device, or a device has transmitted an initialization request, or a device has failed) (step 42). If a network device initialization is required (step 42), service management module 28 causes a selected network infrastructure service module 30 to be received by the network devices to be initialized (step 44). The network infrastructure service modules 30 may be disseminated to the network devices 14-18, 26 in accordance with a push-type or a pull-type transmission model. The network infrastructure service modules 30 may be selected based upon a network management policy (e.g., a user priority policy, a type of service policy, a congestion control policy, a service level policy, or an allocation of resources policy). In addition, service management module 28 determines whether resources should be reallocated in order to optimize the performance of the network under current network conditions (step 46). If a resource reallocation is required (step 46), service management module 28 causes a replacement network infrastructure service module 30 to be received by one or more of the network devices to change their functionality or their operating characteristics, or both (step 48). Service management module 28 also determines whether the network infrastructure service modules 30 loaded onto one or more of the network devices 14-18, 26 should be updated (step 50). If a device update is required (step 50), service management module 28 causes updated network infrastructure service modules 30 to be received by the network devices to be updated (step 52). Service management module 28 periodically interrogates the next network devices 14-18, 26 (step 40), and repeats the above-described service management process (steps 42-52).

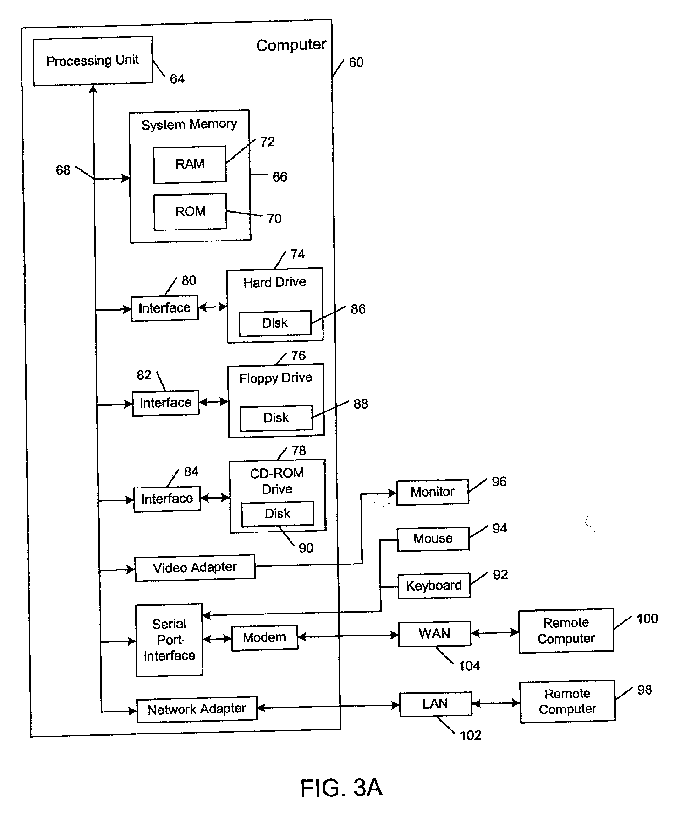

Referring to FIG. 3A, in one embodiment, service management module 28 may be implemented as one or more respective software modules operating on a computer 60. Computer 60 includes a processing unit 64, a system memory 66, and a system bus 68 that couples processing unit 64 to the various components of computer 60. Processing unit 64 may include one or more processors, each of which may be in the form of any one of various commercially available processors. System memory 66 includes a read only memory (ROM) 70 that stores a basic input/output system (BIOS) containing start-up routines for computer 60, and a random access memory (RAM) 72. System bus 68 may be a memory bus, a peripheral bus or a local bus, and may be compatible with any of a variety of bus protocols, including PCI, VESA, Microchannel, ISA, and EISA. Computer 60 also includes a hard drive 74, a floppy drive 76, and CD ROM drive 78 that are connected to system bus 68 by respective interfaces 80, 82, 84. Hard drive 74, floppy drive 76, and CD ROM drive 78 contain respective computer-readable media disks 86, 88, 90 that provide non-volatile or persistent storage for data, data structures and computer-executable instructions. Other computer-readable storage devices (e.g., magnetic tape drives, flash memory devices, and digital video disks) also may be used with computer 60. A user may interact (e.g., enter commands or data) with computer 60 using a keyboard 92 and a mouse 94. Other input devices (e.g., a microphone, joystick, or touch pad) also may be provided. Information may be displayed to the user on a monitor 96. Computer 60 also may include peripheral output devices, such as speakers and a printer. One or more remote computers 98 may be connected to computer 60 over a local area network (LAN) 102, and one or more remote computers 100 may be connected to computer 60 over a wide area network (WAN) 104 (e.g., the Internet).

As shown in FIG. 3B, in one embodiment, a number of program modules may be executed on computer 60, including a basic input/output system (BIOS) 108, an operating system 110 (e.g., the Windows NT® Server operating system available from Microsoft Corporation of Redmond, Washington U.S.A.), a network interface 112, and service management module 28. Operating system 110 includes an executive that provides the base operating system services (e.g., memory management, process and thread management, security, input/output, and interprocess communication) for creating a run-time execution environment on network management node 12. A configuration database (or registry) 114 contains the following information: parameters needed to boot and configure the system; system-wide software settings that control the operation of operating system 110; a security database; and per-user profile settings.

A native operating system (OS) application programming interface (API) exposes the base operating system services of the executive to applications 112, 28 and to one or more operating system service modules (or simply "services"). The operating system service modules are user-mode processes that may be configured to start automatically at system boot time without requiring an interactive logon; they also may be controlled dynamically during run-time. The operating system service modules call certain base operating system services (or functions) to interact with a service controller; such functions may include registering a successful startup, responding to status requests, and pausing or shutting down the service. The service controller starts, manages and directs operations within the operating system service modules. The operating system service modules, on the other hand, create the environment in which one or more processes may operate and control the start-up, maintenance and termination of such processes. Typically, the run-time execution environment is installed on network management node 12, and one or more client programs operating on, for example, application node 20 may access the functionality provided by the operating system service modules over its network connection. Before an operating system service module may operate in the run-time execution environment, it must be installed on network management node 12. An operating system service module typically is installed by storing the service module in a data storage area that is accessible by network management node 12 (e.g., on a disk of system memory 66), and registering the attributes of the service module in the configuration database. Further details about the Windows NT® operating system may be obtained from "Inside Windows NT®," Second Edition, David A. Solomon, Microsoft Press (1998), which is incorporated herein by reference.

Operating system 110 controls the operation of network interface 112, which provides an interface to network 24. Network interface 112 communicates with the network devices operating at nodes 14-18, 26 using a simple network management protocol (SMNP) or some other agreed-upon network protocol. Network interface 112 also may provide low-level services and functions for use by service management module 28.

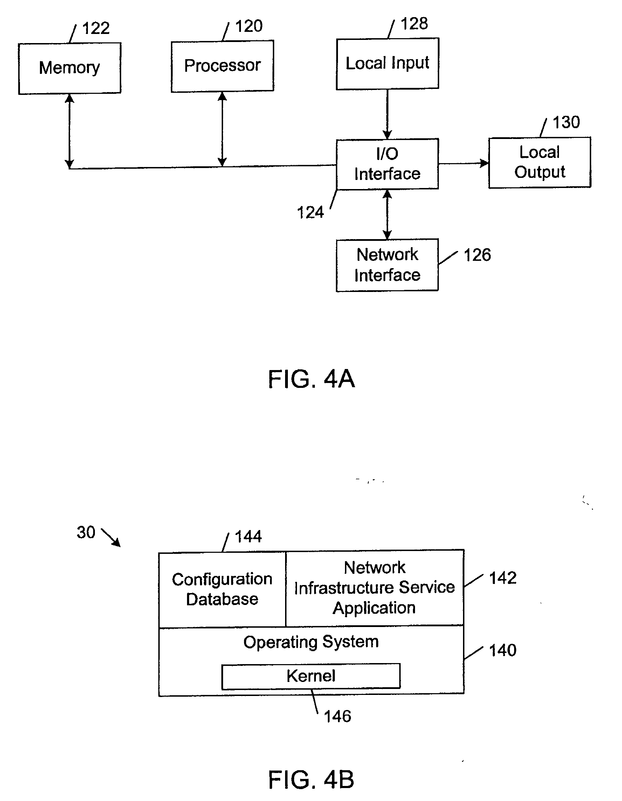

Referring to FIG. 4A, in one embodiment, although each network device 14-18, 26 may have a different overall architecture, these devices share a common core component structure that includes a processor 120, a memory 122, an input/output (I/O) interface 124, and a network interface 126. Each of these components may be conventional components that typically are found in common dedicated-function network devices, such as load balancers, proxies, memory caches, and firewalls. The network device also may include a local input 128 (e.g., a keyboard) and a local output 130 (e.g., a display screen).

As shown in FIG. 4B, in one embodiment, each network device 14-18, 26 is configured to load a received network infrastructure service module 30, which includes an operating system 140, a network infrastructure service application 142, and a configuration database 144. Operating system 140 includes a kernel 142 that provides the base operating system services (e.g., memory management, process and thread management, security, input/output, and interprocess communication) for creating a run-time execution environment on a network device 14-18, 26. Configuration database 144 may contain parameters needed to boot and configure the network device, and system-wide software settings that control the operation of operating system 140. A native operating system (OS) application programming interface (API) exposes the base operating system services of the kernel to network infrastructure service application 142. Network infrastructure service application 142 provides the specific network infrastructure function to be performed by the network device. The function may be, for example, a proxy function, a load balancing function, a memory caching function, an encryption function, a compression function, a re-routing function, an application level network management function, or an active network management function. Each of these functions may be implemented as one or more conventional network infrastructure software modules.

Each network device may perform additional network functions, such as monitoring and collecting information relating to network traffic flowing through a network device. This information may be stored in memory 122 for retrieval by service management module 28. This additional functionality may be enabled by loading one or more corresponding service modules into the network devices during initialization.

Network infrastructure service module 30 may be loaded by a network device at boot-up or dynamically. At boot-up, the network devices may obtain service module 30 by transmitting an initialization request to service management module 28. In response to the initialization request, service management module 28may reply by returning either a selected network infrastructure service module 30 or an identifier with which the network device may retrieve the selected network infrastructure service module 30 from storage node 22. Depending upon the particular implementation and the particular network infrastructure management task to be performed, some or all of the components of network infrastructure service module 30 may be transmitted to a network device. For example, all of the components of the network infrastructure service module 30 may be transmitted to a network device to initialize or change the functionality of the network device. On the other hand, only the configuration file may be transmitted to a network device to update the operating parameters of the network device.

Although systems and methods have been described herein in connection with a particular distributed computing environment, these systems and methods are not limited to any particular hardware or software configuration. In general, the component systems of the network nodes may be implemented, in part, in a computer process product tangibly embodied in a machine-readable storage device for execution by a computer processor. In some embodiments, these systems preferably are implemented in a high level procedural or object oriented processing language; however, the algorithms may be implemented in assembly or machine language, if desired. In any case, the processing language may be a compiled or interpreted language. The methods described herein may be performed by a computer processor executing instructions organized, for example, into process modules to carry out these methods by operating on input data and generating output. Suitable processors include, for example, both general and special purpose microprocessors. Generally, a processor receives instructions and data from a read-only memory and/or a random access memory. Storage devices suitable for tangibly embodying computer process instructions include all forms of non-volatile memory, including, for example, semiconductor memory devices, such as EPROM, EEPROM, and flash memory devices; magnetic disks such as internal hard disks and removable disks; magneto-optical disks; and CD-ROM. Any of the foregoing technologies may be supplemented by or incorporated in specially designed ASICs (application-specific integrated circuits).

Other embodiments are within the scope of the claims.

## Claims

1. A system (10) for managing deployment of a plurality of distributed network infrastructure services, comprising:
a service management module (28) operable to cause a network device (14-18) to receive a network infrastructure service module (30) enabling the network device (14-18) to perform a selected dedicated network infrastructure function.

2. A method of managing deployment of a plurality of distributed network infrastructure services, comprising:
causing a network device (14-18) to receive a network infrastructure service module (30) enabling the network device to perform a selected dedicated network infrastructure function.

3. The subject matter of claim 1 or 2, wherein the network infrastructure service module (30) comprises an application module (142) operable to control the functionality of the network device (14-18), and a configuration file (144) containing parameters controlling operating characteristics of the network device.

4. The system of claim 3, wherein the network infrastructure service module (30) further comprises a kernel (146) operable to provide basic services to the application module (142).

5. The subject matter of claim 1, wherein the service management module (28) is operable to select the dedicated network infrastructure function to be performed by the network device (14-18) based upon a network management policy.

6. The subject matter of claim 1 or 2, wherein the dedicated network infrastructure function is selected from the group consisting of: a network security function, a quality of service function, and a network management function.

7. The system of claim 6, wherein the dedicated network infrastructure function is selected from the group consisting of: a proxy function, a load balancing function, a memory caching function, an encryption function, a compression function, a re-routing function, an application level network management function, and an active network management function.

8. The subject matter of claim 1 or 2, wherein the network infrastructure service module (30) is loadable by the network device (14-18) at boot-up.

9. The subject matter of claim 1 or 2, wherein the network infrastructure service module (30) is dynamically loadable by the network device (14-18).

10. The subject matter of claim 1, wherein the service management module (28) is operable to cause the network device (14-18) to receive a replacement network infrastructure service module (30) enabling the network device (14-18) to perform a different dedicated network infrastructure function.
